# EUROPÄISCHE PATENTSCHRIFT

(11) **EP 1 299 988 B1**
(45) Veröffentlichungstag und Bekanntmachung des Hinweises auf die Patenterteilung: **26.10.2005**
(21) Anmeldenummer: 01953647.3
(22) Anmeldetag: 02.07.2001
(51) Int. Cl.: H04M 1/05

(54) **HÖRER**
LISTENING DEVICE
ECOUTEUR

(30) Priorität: 30.06.2000 AT 11322000
(43) Veröffentlichungstag der Anmeldung: 09.04.2003
(73) Patentinhaber: SPIRIT DESIGN Consulting & Services GmbH, 1190 Wien (AT)
(72) Erfinder: WAGNER, Georg, A-1130 Wien (AT); HUBER, Daniel, A-1080 Wien (AT)
(74) Vertreter: Matschnig, Franz
(86) Internationale Anmeldenummer: PCT/AT2001/000214
(87) Internationale Veröffentlichungsnummer: WO 2002/003662

(56) Entgegenhaltungen:
- US-A- 3 862 378
- US-A- 4 932 052
- US-A- 5 134 655
- US-A- 5 903 644

## Beschreibung

Die Erfindung betrifft einen Hörer, welcher über zumindest eine Schnittstelle mit zumindest einem zumindest für die Ausgabe von Audiosignalen eingerichteten Gerät verbindbar ist, mit zumindest einer Hörkapsel, welche in einem Gehäuse angeordnet ist, und mit einem Haltebügel zur lösbaren Befestigung am Ohr eines Benutzers, wobei der Bügel am Gehäuse und von diesem weglaufend angeordnet ist und das Ohr in einem Bereich der Helix mit einem in Richtung des Gehäuses rücklaufenden Bereich hintergreift, wobei der die Helix hintergreifende Bereich des Bügels einen in befestigtem Zustand an der Rückseite des Ohres anliegenden Endbereich aufweist.

Solche Hörer finden Anwendung etwa in Verbindung mit Mobilfunkgeräten oder Cmnputern, wobei sie dabei zumeist noch ein Mikrofon aufweisen. Solche Geräte werden dann zumeist als Kopfsprechhörer, oder geläufiger als "Headset", bezeichnet, welche mit Geräten zur Ein- und Ausgabe von Audiosignalen, wie eben Mobilfunkgeräten oder Computern verbindbar sind. Im Zusammenspiel mit einem Mobilfunkgerät ermöglichen sie es dem Benutzer beispielsweise, ohne ständige Verwendung seiner Hände Telefonate zu führen. Dazu weist das Headset zumeist einen Lautsprecher sowie ein Mikrofon auf und ist mit dem Mobilfunkgerät etwa mittels eines Kabels elektrisch verbunden. Bei Computern finden solche eingangs genannten Headsets etwa Verwendung im Zusammenhang mit sogenannter Spracherkennungssoftware, bei der einerseits dem Computer von Seiten eines Benutzers Sprache über das Mikrofon des Headsets eingegeben wird, die der Computer in ausführbare Befehle oder in Text umwandelt, und andererseits können auch vom Computer generierte Töne, gesprochene Sätze, Musik etc. über den Lautsprecher des Headsets ausgegeben werden.

Im Handel erhältlich sind die verschiedensten Variationen solcher Headsets, die je nach Anwendungsgebiet unterschiedlich ausgeführt und ausgebildet sind. Häufig verbreitet sind Headsets, die einzig aus einem Lautsprecher bestehen, der so ausgebildet ist, dass er - wie dies auch von Kopfhörersets für tragbare Musikwiedergabegeräte bekannt ist - nach einem Einsetzten in das Außenohr im Bereich des Schalltrichters bzw. des äußeren Gehörgangs dort einen relativ guten Halt aufweist. Der Kopfhörer ist mit einem Kabel über eine entsprechende Schnittstelle zumeist mit einem Mobilfunkgerät verbindbar, das Mikrofon wird von dem Kabel getragen und befindet sich in Nähe zum Mund des Benutzers, sodass eine Eingabe von Sprache möglich ist. Diese kostengünstige und deshalb weitverbreitete Ausführungsform eines Headsets weist allerdings mehrere Nachteile auf. Viele Personen empfinden das Einsetzten des Lautsprechers in den Gehörgang bzw. in den Schalltrichter des Ohres als äußerst unhygienisch, wodurch ein Headset zumeist nur von einer Person verwendet wird. Außerdem ist ein guter Halt des Kopfhörers im Ohr meist nur dann gegeben, wenn er möglichst fest und tief in den Schalltrichter bzw. äußeren Gehörgang eingeführt wird, wodurch das ohnehin ständig vorhandene und meist als sehr unangenehm empfundene Fremdkörpergefühl im Ohr noch zusätzlich verstärkt wird.

Bei einer anderen bekannten Variante ist der Kopfsprechhörer mittels eines Bügels, welcher an einem Ende mit einem Lautsprecher verbunden ist, am Kopf des Benutzers gehalten, wobei der Bügel von einem Ohr über den Kopf bis in etwa in den Bereich des zweiten Ohres reicht. Ein Fortsatz, der an seinen äußeren Enden in Mundnähe ein Mikrofon trägt, ist an dem Lautsprecher angebracht. Solche Headsets sind im Zusammenhang mit Spracheingabeprogrammen für Computer häufig verbreitet und kommen zumeist auch in Telefon- und Auskunftszentralen, in denen die Benutzer die Headsets durchgehend für längere Zeit tragen, zum Einsatz. Insbesondere für den mobilen Einsatz, etwa als Freisprecheinrichtung für Mobilfunkgeräte, eignen sich diese Ausführungen allerdings nur bedingt, da sie unhandlich, relativ schwer und außerdem nach der Benutzung nur schwer zu verstauen sind.

Ein speziell für die Verwendung mit Mobilfunkgeräten ausgebildetes Headset ist aus der WO 95/15044 bekannt. In diesem Dokument wird ein Headset geoffenbart, welches aus einem Lautsprecher sowie einem Mikrofon, welches an einem Ende eines Fortsatzes angeordnet ist, besteht, wobei der Fortsatz an einem den Lautsprecher aufnehmenden Hauptteil befestigt ist. Das Headset weist einen U-förmigen Bügel auf, welcher an dem Hauptteil angeordnet ist. Der U-förmige Bügel besteht aus zwei Schenkeln, die mittels eines oberen Verbindungsstückes miteinander verbunden sind. Im befestigten Zustand liegt das Headset mit diesem Verbindungsstück am Ohr auf, in dessen obersten, am Kopf des Benutzers angewachsenen Bereich. Zur Ausbalancierung und für einen stabilen Halt am Ohr weist das Headset weiters am Ende jenes Schenkels, der nicht mit dem Gehäuse verbunden ist, ein Gewicht auf, der andere Schenkel ist an seinem unteren Ende mit dem Hauptteil verbunden.

Das Headset wird somit an dem Ohr eines Benutzers durch sein Eigengewicht gehalten, wobei zum Ausgleich des Gewichts des in der Regel bis in Mundnähe ragenden, das Mikrofon tragenden Fortsatzes an dem freien Schenkel ein zusätzliches Gewicht angeordnet ist oder der Schenkel ein dementsprechendes Eigengewicht aufweist. Infolge der Gewichtsbelastung kommt es allerdings nach einer gewissen Tragedauer des Headsets zu für den Benutzer unangenehmen Druckstellen im Bereich der Aufliegestelle des Verbindungsstückes zwischen den beiden Schenkeln im oberen Bereich des Ohres, was insbesondere durch die Notwendigkeit der Verwendung eines an einem Schenkel angeordneten Gewichtes noch verstärkt wird.

Außerdem ist bei dem gezeigten Headset ein guter und stabiler Sitz am Ohr nur dann gewährleistet, wenn der Benutzer sich in nahezn aufrechter Position befindet, was allerdings zumeist nur im Stehen oder Sitzen gewährleistet ist. Rasche Bewegungen hingegen können leicht zu einem Verrutschen des Headsets führen

Aus der US 4,932,052 A ist ein kombiniertes Headset-Handset bekannt geworden, dass einerseits an einem Ohr eines Benutzers befestigbar ist, das andererseits aber hinsichtlich seiner Abmessungen sowie seiner Gestalt so ausgebildet ist, dass es auch als Handsprechhörer Verwendung finden kann. Das Headset-Handset weist ein Gehäuse auf, welches einen Lautsprecher aufnimmt. Das Gehäuse ist so geformt, dass es im Bereich des Gehörganges bzw. Schalltrichters in das Ohr eingesetzt werden kann. Zur Befestigung am Ohr weist das Headset einen Querbalken auf, der gegen die Rückseite in des Ohres - in jenem Bereich, in dem das Ohr am Kopf angewachsen ist - gedrückt ist. Zur Anpassung an verschiedene Ohrgrößen ist der Querbalken in Bezug auf das Gehäuse verschiebbar angeordnet, wobei die Fixierung des Querbalkens in der gewünschten Position relativ zum Gehäuse mittels einer Feder erfolgt.

Nachteilig an diesem Headset-Handset ist neben der Tatsache, dass es sich aufgrund der Verwendung als Handset um ein relativ großes und schweres Produkt handelt, insbesondere der komplizierte Mechanismus zum Anbringen und Fixieren des Headsets am Ohr. In Folge der Verwendung von verschiebbaren Teilen sowie einer Feder zum Fixieren des Querbalkens relativ zum Gehäuse ist das in der US 4,932,052 A geoffenbarte Headset vergleichsweise teuer in der Herstellung sowie einer hohen Abnutzung ausgesetzt und somit wartungsanfällig. Im Sinne einer guten Fixierung des Headsets am Ohr ist es weiters notwendig, dass dieses mit dem den Lautsprecher aufnehmenden Gehäuse relativ fest in das Ohr im Bereich des Gehörganges bzw. Schalltrichters eingesetzt wird und der Querbalken fest gegen die Rückseite des Ohres gedrückt ist, was in der Regel zu unangenehmen Druckstellen in den genannten Bereichen des Ohres, insbesondere bei längerem Tragen des Headsets, führt.

US 5,903,644 A zeigt einen weiteren Hörer, der am Ohr eines Benutzers getragen wird und bei dem die Verformbarkeit über ein Gelenk realisiert wird, wobei der Bügel um dieses Gelenk gegen die Rückstellkraft einer Feder verschwenkbar ist.

Es ist eine Aufgabe der Erfindung, einen Hörer zu schaffen, der auf einfache, unkomplizierte Weise an einem Außenohr eines Benutzers lösbar befestigbar ist.

Weiters ist es eine Aufgabe der Erfindung, einen Hörer zu schaffen, der auf konstruktiv einfache Weise herstellbar ist.

Schließlich ist es auch noch eine Aufgabe der Erfindung, einen Hörer zu schaffen, der hohen Tragekomfort gewährleistet und ein sicheres Tragen des Hörers über einen langen Zeitraum ohne das Auftreten von typischen Beschwerden, wie Druckstellen an dem Ohr des Benutzers, erlaubt.

Diese Aufgaben werden mittels eines eingangs erwähnten Hörers dadurch gelöst, dass erfindungsgemäß
- der Haltebügel verformbar ausgebildet ist, und
- das Gehäuse an seiner der Außenseite der Ohres zugewandten Seite eine Ohrauflagefläche aufweist, wobei
- in befestigtem Zustand der Bügel zumindest bereichsweise gegen die Rückseite des Ohres und der Hörer mit der Ohrauflagefläche zumindest bereichsweise so gegen die Außenseite des Ohres gedrückt ist, dass die Hörkapsel im Nahbereich des Schalltrichters und/oder der Gehörgangsöffnung des Ohres angeordnet ist, wobei die Ohrauflagefläche sowie die Hörkapsel einen Abstand zu der Gehörgangsöffnung aufweisen.

Der erfindungsgemäße Hörer kann auf einfache Weise dadurch am Ohr befestigt werden, dass der Bügel so verformbar ist, dass er vor dem Aufsetzen durch den Benutzer so geformt werden kann, dass der rücklaufende Bereich des Bügels leicht hinter das Ohr zu bringen ist. Beispielsweise wird der rücklaufende Bereich des Bügels von dem Gehäuse des Hörers abgespreizt, und der rücklaufende Bereich kann hinter das Ohr gebracht werden. Das Gehäuse wird gleichzeitig in eine für den Benutzer angenehme Position am Außenohr gebracht, wobei die Hörkapsel in Nähe zu dem Schalltrichter des Ohres und der Gehörgangsöffnung gebracht wird, sodass ein gutes Hören gewährleistet ist. Dabei ist es nicht notwendig, die Hörkapsel in die Gehörgangsöffnung einzuführen, sodass unangenehme Druckstellen vermieden werden und ein langes, komfortables Tragen gewährleistet ist

Ein besonders guter Halt des Hörers ist gegeben, wenn der Bügel elastisch verformbar ist. In diesem Fall wird bei einem Loslassen des abgespreizten Bügels dieser einerseits bereichsweise gegen die Rückseite des Ohres gedrückt, andererseits drückt er das Gehäuse des Kopfsprechhörers mit dessen Ohrauflagefläche gegen das Außenohr, wobei einerseits durch die flächige Ausbildung Ohrauflagefläche eine gute Druckverteilung erfolgt und andererseits der Kopfsprechhörer in relativ unempfindlichen Bereichen des Ohres aufliegt. Auch in diesem Fall ist natürlich ein Einführen der Hörkapsel in die Gehörgangsöffnung für den guten Sitz des Hörers am Ohr nicht notwendig.

Um eine relativ große Auflagefläche zu bieten sowie ein Eindringen der Hörkapsel in den Schalltrichter bzw. in den äußeren Gehörgang zuverlässig zu verhindern, ist es günstig, wenn die Fläche eine über die Ausdehnung der Hörkapsel hinausreichende Erstreckung aufweist.

Bei einer ästhetisch ansprechenden und einfach herzustellenden Ausführungsform der Erfindung ist der Bügel C-förmig ausgebildet.

Für einen Benutzer ist der erfindungsgemäße Hörer besonders komfortabel zu tragen, wenn an dem die Helix hintergreifenden Ende des Bügels ein sich mit einer Kontur an der Rückseite des Ohres abstützendes Passstück angeordnet ist, wobei es besonders zweckmäßig ist, wenn die mit der Rückseite der Ohres zusammenwirkende Kontur des Passstückes im wesentlichen der Form der Rückseite des Ohres angepasst ist. Mittels des Passstückes wird der von dem Bügel erzeugte, auf die Rückseite des Ohres wirkende Druck gleichmäßig verteilt, sodass der Entstehung von Druckstellen zuverlässig vorgebeugt ist. Auch wird ein Verrutschen nach oben oder unten mittels des Passstückes verhindert.

Bei einer vorteilhaften Ausführungsform sind dabei das Passstück und der Bügel einstückig ausgebildet, das Passstück stellt im wesentlichen eine Verbreiterung des Bügels dar.

Besonders angenehm ist der Hörer zu tragen, wenn das Passstück mit einem gummiartigen Überzug versehen ist.

Über einen besonders guten Halt verfügt der Hörer, wenn er in einem hinteren, dem Bügel zugewandten Bereich der Ohrauflagefläche eine Erhebung aufweist, welche in befestigtem Zustand des Hörers in einem hinteren, im wesentlichen der Antihelix zugewandten Bereich des Schalltrichters bzw. in dem in die Antihelix übergehenden Bereich des Schalltrichters abgestützt ist, da mit dieser Erhebung ein Verrutschen nach hinten ausgeschlossen ist.

Für den Benutzer komfortabel ist es, wenn die Erhebung eine im wesentlichen abgerundete Kontur aufweist, die in etwa der Form des Schalltrichters nachempfundene ist.

Zweckmäßigerweise ist dabei die Erhebung einstückig mit der Hörkapsel ausgebildet.

Zur Verwendung mit beispielsweise Mobilfunkgeräten ist es notwendig, dass der Hörer zumindest ein Mikrofon aufweist.

Dabei ist bei einer erprobten Ausführungsform das zumindest eine Mikrofon in einem vorderen, dem Bügel abgewandten Bereich des Hörers angeordnet ist, sodass das Mikrofon in die Richtung des Mundes des Benutzers ausgerichtet ist.

Auf einfache Weise lässt sich das Mikrofon in Mundnähe bringen, wenn der Hörer in einem vorderen, dem Bügel abgewandten Bereich einen ausfahrbaren Mikrofonarm aufweist, welcher in seinem vorderen Bereich das zumindest eine Mikrofon aufnimmt.

Besonders nahe an den Mund lässt sich das Mikrofon bringen, wenn der Mikrofonarm teleskopartig ausfahrbar ist.

Um ein Aufliegen des Hörers an dem empfindlichen Tragus des Ohres zu verhindern und den Kopfsprechhörer gegen Schwingbewegungen, beispielsweise beim Gehen oder Laufen, abzustützen, weist er in einem vorderen, dem Ohr abgewandten Bereich eine Abstützung zum Abstützen des Hörers in einem unmittelbar vor dem Ohr liegenden Bereich des Kopfes auf.

Angenehm zu tragen ist der Hörer dabei, wenn die Abstützung zumindest bereichsweise mit einem gummiartigen Überzug versehen ist.

Auf beiden Ohren lässt sich der Hörer verwenden, wenn er einen hinsichtlich einer Längsachse symmetrischen Aufbau aufweist, wobei dann keine weiteren Manipulationen am Hörer bei einem Wechsel von einem auf das andere Ohr notwendig sind.

Bei einer charakteristischen Ausführungsform weist das Gehäuse in einer Seitenansicht eine im wesentlichen dreiecksartige Form auf, welche beispielsweise durch eine im wesentlichen gleichschenkelige oder gleichseitige dreiecksartige Form gekennzeichnet ist.

Bei einer komfortabel zu tragenden, optisch ansprechenden Ausführungsform des erfindungsgemäßen Hörers sind die Dreiecksseiten im wesentlichen bogenförmig ausgebildet.

Weiters weist diese Ausführungsform abgerundete Ecken auf.

Um den Hörer einfach betätigen zu können, ist es günstig, wenn an der dem Ohr abgewandten Seite ein Betätigungselement zum Entgegennehmen und/oder Tätigen von Anrufen vorgesehen ist.

Zweckmäßig ist es außerdem, wenn das Betätigungselement über eine im Gehäuseinneren angeordnete Mechanik so mit dem ausfahrbaren Mikrofonarm verbunden ist, dass bei einer Betätigung des Elements der Arm aus seiner eingefahrenen in eine ausgefahrene Position ausgefahren wird.

Bei einer komfortabel zu tragenden und langlebigen Ausführung ist die Ohrauflagefläche als Abdeckteil für die Gehäuseunterseite ausgeführt und an dieser lösbar befestigbar.

Günstig ist es dabei, wenn der Abdeckteil aus einem gummiartigen Material gefertigt ist. Weiters ist es auch noch günstig, wenn das aus Gummi gefertigte Abdeckteil sowie der Gummiüberzug für die Abstützung einstückig ausgebildet sind.

Im folgenden ist die Erfindung an Hand der Zeichnung näher erläutert. In dieser zeigen
Fig. 1 eine Unteransicht des bzw. Draufsicht auf den erfindungsgemäßen Hörer,
Fig. 2 eine Ansicht der Außenseite des Hörers nach der Erfindung,
Fig. 3 eine Vorderansicht eines gegenständlichen Hörers,
Fig. 4 eine perspektivische Ansicht der Außenseite des erfindungsgemäßen Hörer,
Fig. 5 eine perspektivische Ansicht der Innenseite des erfindungsgemäßen Hörer,
Fig. 6 eine Seitenansicht der Innenseite des Hörers,
Fig. 7 einen an einem Ohr befestigten Hörer, und
Fig. 8 eine schematische Ansicht eines rechten Ohres von außen lateral.

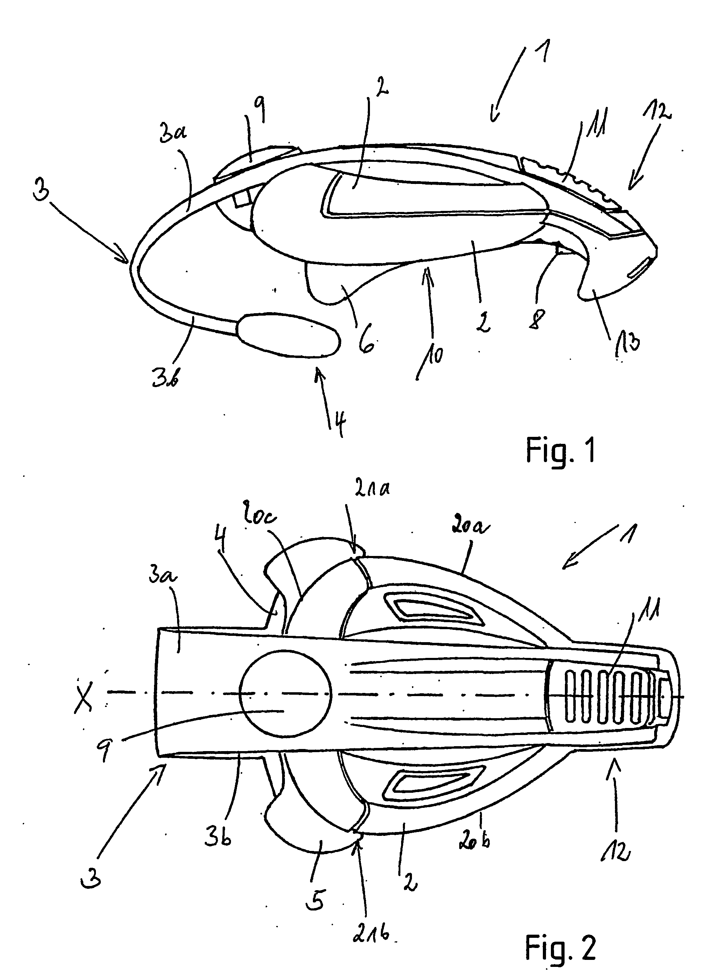

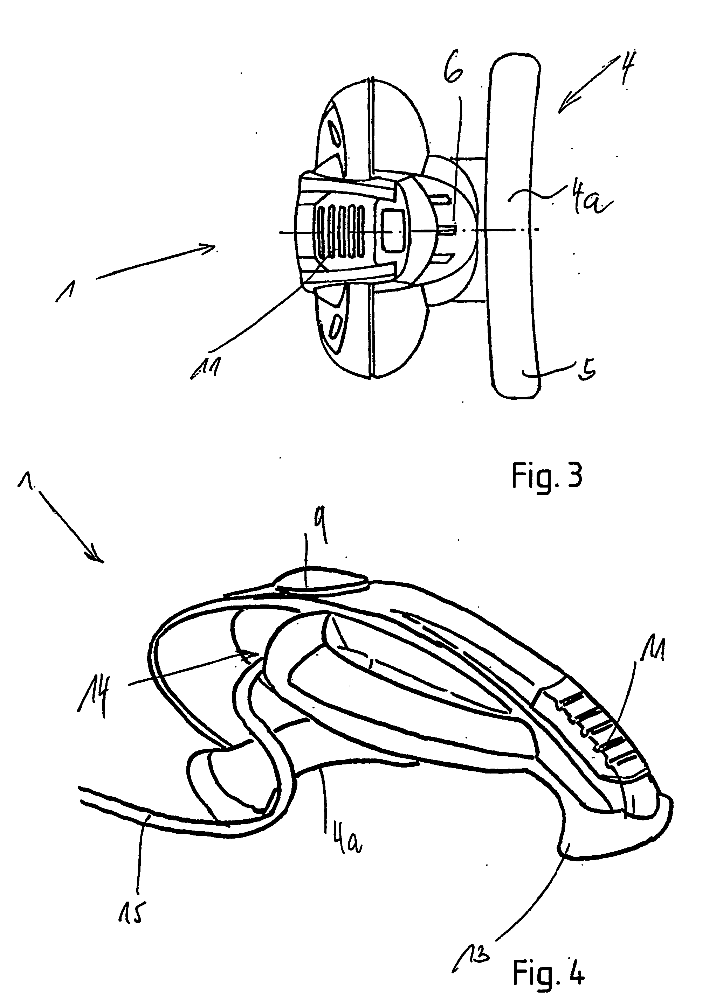

Eine beispielhafte Ausführungsform des erfindungsgemäßen Hörers 1 ist in den Figuren 1 - 7 in unterschiedlichen Ansichten dargestellt. Wie im weiteren noch erläutert wird, weist der dargestellte Hörer ein Mikrofon auf, weshalb im folgenden Text auch meist von Kopfsprechhörer bzw. "Headset" die Rede sein soll, ohne dass dadurch die vorliegenden Ansprüche auf einen Kopfsprechhörer eingeschränkt werden sollen.

Das Headset 1 besteht im wesentlichen aus einem Gehäuse 2 sowie einem mit dem Gehäuse 2 in Verbindung stehenden Bügel 3, wobei der Bügel 3 gemäß der Erfindung elastisch oder plastisch ausgebildet ist. Das Gehäuse weist an der in befestigtem Zustand dem Ohr EAR eines Benutzers zugewandten Seite eine Ohrauflagefläche 10 auf. Im Inneren des Gehäuses 2 ist ein Lautsprecher bzw. eine Hörkapsel 7 angeordnet, wobei in der gezeigten Ausführungsform die Ohrauflagefläche 10 eine Ausnehmung für den Lautsprecher 7/die Hörkapsel 7 aufweist.

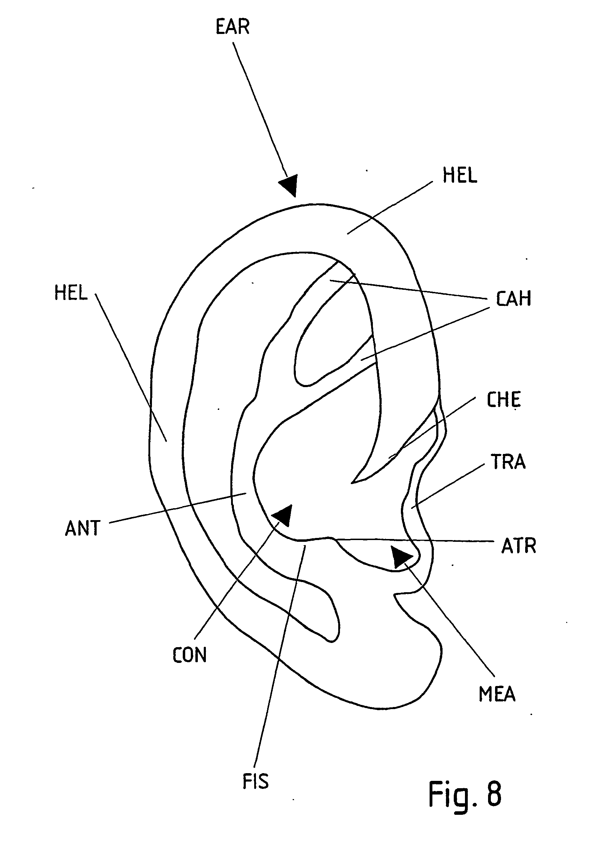

Zum besseren Verständnis der Erfindung ist in der Fig. 8 schematisch ein rechtes Außenohr EAR eines Benutzers dargestellt. Die im Zusammenhang mit der Erfindung wesentlichsten Bereiche des Ohres EAR sind dabei der einwärtsgekrempelte Rand der Ohrmuschel, die sogenannte Helix HEL, weiters die Antihelix ANT und die Concha auriculae CON, die im folgenden Kontext als Schalltrichter CON bezeichnet werden soll. Bei dem Schalltrichter CON, für welchen häufig auch die Bezeichnung "Ohrmuschel" verwendet wird, handelt es sich um eine in den äußeren Gehörgang bzw. in die Gehörgangsöffnung MEA (Meatus acusticus) überleitende Vertiefung, die in einem hinteren und oberen Bereich von der Antihelix ANT sowie der unteren Verzweigung CAH (Crura anthelicis) der Antihelix, sowie in einem unteren Bereich von der Fissura antitragohelicina FIS mit dem Antitragus ATR, und in einem vorderen Bereich von der Crus helicia CHE begrenzt wird

Im Gegensatz zu vielen anderen bekannten Headsets ist in Folge der besonderen Ausgestaltung ein optimaler und stabiler Sitz des Headsets am Ohr des Benutzers gewährleistet, ohne dass es notwendig ist, den Lautsprecher bzw. die Hörkapsel in den äußeren Gehörgang bzw. die Gehörgangsöffnung MEA einzusetzen, was im folgenden näher erläutert werden soll.

Wie den Figuren 1 - 6 zu entnehmen ist, besteht der Bügel 3 aus zwei wesentlichen Abschnitten 3a, 3b, von denen der eine Abschnitt 3a von dem Gehäuse 2 weglaufend und der zweite Abschnitt 3b wieder zu dem Gehäuse rücklaufend ausgebildet ist. Dabei ist in der gezeigten Ausführungsform der Bügel 3 C-förmig ausgebildet, kann aber beispielsweise auch abgewinkelt ausgebildet sein. Bei einem Aufsetzen des Headsets 1 spreizt der Benutzer einfach den verformbaren Bügel, insbesondere den rücklaufenden Abschnitt 3b, von dem Gehäuse 2 weg, sodass der Bügel mit seinem rücklaufenden Abschnitt 3b bequem hinter das Ohr gebracht werden kann, sodass der Bügel 3 das Ohr EAR in einem Bereich der Helix HEL mit seinem rücklaufenden Abschnitt 3b hintergreift. Unter verformbar soll dabei verstanden werden, dass der Bügel in einem solchen Ausmaß eine Formänderung erfahren kann, dass er an die Form des Ohres des Benutzers angepasst werden kann. Der Bügel kann etwa plastisch verformbar sein, besonders vorteilhaft ist es allerdings, wenn er elastisch verformbar ist, wovon im folgenden ausgegangen werden soll.

Infolge der Elastizität des Bügels wird nach Beendigung des Abspreizvorganges das Gehäuse 2 mit seiner Ohrauflagefläche 10 zumindest bereichsweise gegen die Außenseite des Ohres EAR gedrückt und der Bügel ist mit seinem rücklaufenden Bereich 3b gegen die Rückseite des Ohres gedrückt. Infolge der relativ großen Fläche der an das Ohr gedrückten Ohrauflagefläche 10 des Gehäuses 2, die sich bei der gezeigten Ausführungsform über die Ausdehnung der Hörkapsel 7 erstreckt, wird der von dem Bügel 3 ausgeübte Druck auf verschiedene Bereiche an der Außenseite des Ohres EAR, beispielsweise im Bereich der Antihelix ANT und/ oder der Helix HEL, verteilt, sodass keine unangenehmen Empfirtdungen aufgrund von Druckstellen an dem Ohr entstehen. Auch ist es zufolge der flächigen Ausbildung des Gehäuses 2 nicht möglich, dass das Headset etwa bereichsweise in den Gehörgang MEA gedrückt wird.

Der die Helix HEL hintergreifende Bereich des Bügelabschnittes 3b ist so ausgebildet, dass er gegen die Rückseite des Ohres gedrückt ist. Infolge der Klemmwirkung des Bügels 3 ist das Headset 1 effektiv gegen ein Verrutschen am Ohr EAR gesichert. Um den Halt und den Tragekomfort noch zu erhöhen, weist das Headset im Bereich der Fläche 10 noch eine Erhebung 6 auf, welche beispielsweise eine abgerundete Kontur aufweist. Die Erhebung 6 ist zweckmäßigerweise in einem hinteren, dem Bügel 3 zugewandten Bereich der Fläche 10 angeordnet, sodass die Erhebung 6 in einem befestigten Zustand zumindest teilweise in den Schalltrichter CON, und zwar in dessen hinteren, von der Antihelix ANT begrenzten Bereich, hineinragt. Diese Erhebung 6 verhindert zuverlässig ein Verrutschen des Headsets am Ohr nach hinten.

Der Bügel 3 liegt mit seinem Endbereich des rücklaufenden Abschnittes 3b zusätzlich noch an der Rückseite des Ohres in jenem Bereich, mit dem dieses an den Kopf angewachsen ist, an. Dabei ist es günstig, wenn der Bügel 3 an seinem das Ohr EAR hintergreifenden Abschnitt 3b ein Passstück 4 aufweist, welches eine an der Rückseite des Ohres anliegende, an den Verlauf der Rückseite des Ohres angepasste Kontur aufweist. Dieses in der Zeichnung etwa "biskottenförmige" Passstück 4 ist bei einer vorteilhaften Ausführungsform einstückig mit dem Bügel 3 ausgebildet und im Sinne eines optimalen Tragekomforts mit einem weichen Kunststoffüberzug 5, etwa aus Gummi, versehen ist.

Mit dem Passstück 4 wird erreicht, dass der von dem Bügel 3 auf die Rückseite des Ohres ausgeübte Druck kaum oder gar nicht zu spüren ist und zusätzlich ein nach oben oder unten Rutschen des Sprechhörers zuverlässig verhindert ist, was durch den Kunststoffüberzug 5 noch zusätzlich verbessert wird.

Somit wird in der gezeigten Ausführungsform das Headset mittels des Bügels gegen das Ohr gedrückt; ein nach vorne Rutschen des Headsets ist durch den hintergreifenden, hier C-förmigen Bügel 3 verhindert, ein nach hinten Rutschen durch die Erhebung 6. Ein Verrutschen nach oben oder unten ist einerseits durch den Druck der Fläche 10 des Gehäuses 2 gegen die Außenseite des Ohres, andererseits noch durch das Passstück 4 sowie die Erhebung 6 verhindert. Grundsätzlich reicht aber schon alleine der Druck von der an der Außenseite des Ohres anliegenden Fläche 10, um einen sicheren Halt des Sprechhörers 1 am Ohr zu gewährleisten.

Das Gehäuse 2 weist in der gezeigten Ausführungsform einen symmetrischen Aufbau in Hinblick auf eine Längsachse X auf. In einer Seitenansicht nach der Fig. 2 zeigt das Gehäuse 2 dabei eine etwa dreiecksartige Form mit drei in etwa gleich langen Seiten 20a - 20c. Die Ecken 21a - 21c des Dreiecks sind dabei abgerundet ausgebildet.

Infolge des symmetrischen Aufbaus des Gehäuses ist das Headset sowohl auf linken als auch rechten Ohren einsetzbar, ohne dass irgendeine Manipulation an dem Sprechhörer durchzuführen ist. Damit wird auf konstruktiv einfache Wiese ein bei vielen Headsets, wie etwa jenem aus der WO 95/15044, auftretendes Problem behoben. Bei Headsets wie in der WO 95/15044 beschrieben, ist ein Tragen des Headsets infolge der Befestigungsart zumeist nur an einem Ohr möglich. Ein wechselseitiges Tragen auf beiden Ohren kann manchmal dadurch erreicht werden, dass etwa der Lautsprecher verdrehbar angeordnet ist, sodass nach einem Verdrehen desselben das Headset am anderen Ohr verwendet werden kann. Bei der vorliegenden Erfindung ist dies nicht notwendig, und es kann völlig problemlos auf beiden Ohren durch einfaches Umsetzten auf das andere Ohr verwendet werden.

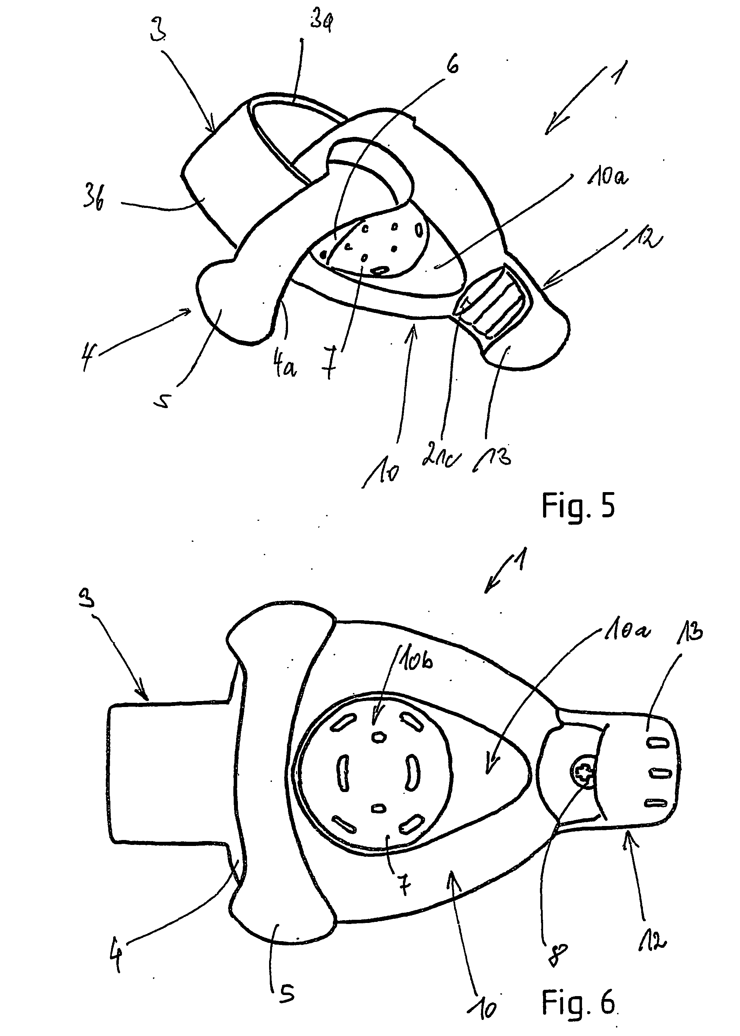

Die dem Ohr zugewandte Seite 10 des Gehäuses 2 ist, wie bereits angesprochen, flächig ausgebildet und nimmt den Lautsprecher 7 bzw. die Hörkapsel auf. Die Fläche kann dabei im wesentlichen eben ausgebildet sein. Eine beispielhafte, zweckmäßige Ausgestaltung der Fläche 10 ist aus Fig. 5 sowie Fig. 6 Schnitt zu erkennen, wo die Fläche in einem inneren Bereich 10a nach innen gewölbt (konkav) ausgebildet ist, und der innere Bereich eine sich in Richtung Bügel 3 hin verbreiternde Gestalt aufweist. Der innere, etwa dreiecksförmige Bereich 10a weist eine Ausnehmung für den Lautsprecher bzw. die Hörkapsel 7 auf, weiters ist die Erhebung 6 im wesentlichen im hinteren, dem Bügel zugewandten Bereich der inneren Fläche 10a ausgebildet. Dabei kann die Erhebung 6 einstückig aus der Fläche 10a ausgebildet sein, oder der Lautsprecher/ die Hörkapsel 7 weist eine entsprechende Erhebung 6 auf.

Im Bereich ihres Außenrandes 10b ist die Fläche 10 im wesentlichen nach außen gewölbt, wobei der Übergang zwischen den Bereichen 10a und 10b der Fläche 10 unstetig über eine Kante erfolgt. Dieser Übergang kann aber auch durch einen kontinuierlichen Verlauf erfolgen.

In einem vorderen Bereich des Sprechhörers 1 ist ein Mikrofon 8 angeordnet. Dieses kann dabei fest in einer an dem Gehäuse 2 befindlichen Aufnahme angeordnet sein. Die Aufnahme kann unmittelbar in dem Gehäuse 2 angeordnet sein, oder, wie dies etwa der Fig. 5 oder 6 zu entnehmen ist, in einem an dem Gehäuse 2 angeordneten Vorsprung 12, beispielsweise an dessen Unterseite, angebracht sein. Bei dieser Anordnung befindet sich das Mikrofon 8 zwar in relativ großem Abstand zum Mund des Benutzers, insbesondere da der Sprechhörer 1 in der gezeigten Ausführungsform eine kaum über das Ohr hinausreichende Erstreckung aufweist. Allerdings stellt dies hinsichtlich der Sprachqualität mit der zur Verfügung stehenden Mikrofonqualität kein Problem dar.

Es kann aber auch vorgesehen sein, dass das Mikrofon an einem Mikrofonarm 11 angeordnet ist, wobei dieser beispielsweise aus einer in dem Vorsprung 12 und/oder dem Gehäuse 2 eingezogenen Position mittels einer vorzugsweise in dem Gehäuse 2 angeordneten Mechanik in zumindest eine Sprechposition ausfahrbar ist. Das Mikrofon ist dabei in einem vorderen Bereich, zweckmäßigerweise an einer in Richtung Mund oder Gesicht weisenden Seite des Mikrofonarms, angeordnet und in der Zeichnung, insbesondere den Figuren 1 - 4,die einen Mikrofonarm 11 in eingezogener Position zeigen, nicht dargestellt.

Grundsätzlich besteht auch die Möglichkeit, das Mikrofon 8 an einem starren oder verformbaren Telefonarm mit im wesentlichen unveränderbarer Länge, wie diese hinlänglich bekannt sind, anzuordnen. Dies widerspricht allerdings in gewisser Hinsicht einem der Erfindung zu Grunde liegenden Gedanken, nämlich ein relativ kleines Headset zu bieten, weswegen diese durchaus denkbare Variante auch nicht in der Zeichnung dargestellt ist.

Zur Abstützung des Headsets im Bereich der Wange des Benutzers weist dieses schließlich in einem vorderen Bereich, bei der gezeigten Ausführungsform im vorderen Bereich des Vorsprungs 12, noch eine Abstützung 13 auf. Mit dieser Abstützung 13 wird das Headset 1 unmittelbar vor dem Ohr an der Wange so abgestützt, das die Ohrauflagefläche 10 des Headsets mit dem Tragus TRA, einer bei jedem Menschen mehr oder weniger stark ausgeprägten Knorpelerhebung des Ohres, nicht in Berührung kommt, da diese Stelle relativ empfindlich auf Berührungen und insbesondere Druck reagiert.

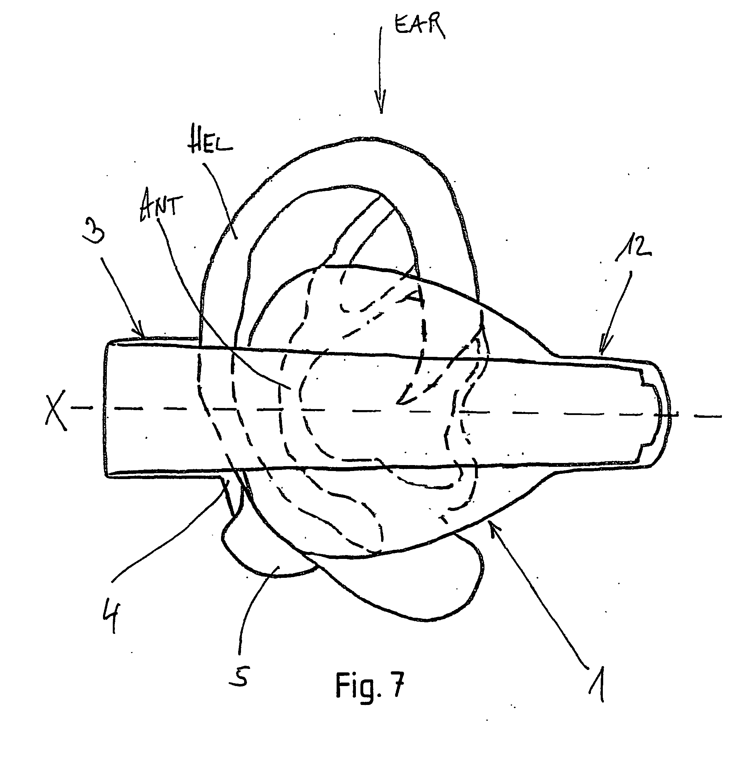

Zur Abschätzung der ungefähren Größe eines erfindungsgemäßen Headsets ist auf die Fig. 7 verwiesen, die ein an einem Ohr befestigtes Headset zeigt. Dabei nimmt das Headset hinsichtlich seiner Längsachse X eine - bei angenommener aufrechter Position des Benutzers - im wesentlichen waagrechte Lage ein. Je nach Ohrform und Vorliebe des Benutzers kann das Headset aber auch eine wesentlich schrägere Lage einnehmen, wobei er Bügel 3 das Ohr EAR dann in einem höheren Bereich der Helix HEL hintergreift. Auch die Größenverhältnisse können natürlich, etwa in Abhängigkeit von der Ohrgröße, variieren.

Die gezeigten Ausführungsformen weisen eine modulare Bauweise auf. So sind die Oberseite, d. h. die von einem Ohr im wesentlichen abgewandete Seite des Gehäuses 2, der Bügel 3 mit dem Passstück 4 sowie der Vorsprung 12 im vorderen Bereich des Headsets 1 bei der gezeigten Ausführung der Fafindung einstückig ausgebildet. Das Gehäuse 2 nimmt den Lautsprecher 7 bzw. die Hörkapsel auf. Verschlossen wird das Gehäuse 2 mit einem separaten Abdeckteil, welches an der dem Ohr zugewandten Seite die bereits mehrfach erwähnte Ausbildung als Ohrauflagefläche 10 aufweist. In seinem zentralen Bereich weist das Abdeckteil eine für den Lautsprechers bzw. die Hörkapsel angepasste Ausnehmung auf. Das Abdeckteil erstreckt sich bei der gezeigten vorteilhaften Ausführungsform der Erfindung bis in den vorderen Bereich des Vorsprungs 12 am Gehäuse 2 und bekleidet dessen der Wange zugewandte Abstützung 13. Das Abdeckteil mit der die Abstützung abdeckenden Erstreckung ist dabei aus Kunststoff, beispielsweise aus einem Plastomer wie PVC oder einem Elastomer wie Gummi hergestellt. Durch entsprechende Wahl des verwendeten Materials ergeben sich angenehme Aufliegeeigenschaften des Headsets am Ohr und an der Wange infolge der Weichheit des Materials, außerdem ist durch einen hohen Reibungskoeffizienten ein stabiler Sitz des Hörers am Ohr gewährleistet. Das Abdeckteil wird einfach auf das Gehäuseoberteil aufgesteckt und kann bei Bedarf gegen einen neues Abdeckteil ausgetauscht werden. Dadurch können auf einfache Weise die "verschleißanfälligen" Bestandteile des Sprechhörers ausgetauscht werden. Auch ist es etwa möglich, die Kunststoffteile in verschiedenen Farben herzustellen, um so das Aussehen des Headsets rasch ändern zu können. Aus ähnlichen Materialien ist auch der Überzug 5 für das Passstück 4 hergestellt, und auch in diesem Falle kann auf einfache Weise bei Bedarf der Überzug gegen einen anderen ausgetauscht werden.

An der Oberseite des Gehäuses 2 befindet sich noch ein Betätigungselement 9, hier in Form eines Knopfes, der etwa dazu dient, eingehende Anrufe durch Drücken entgegen zu nehmen oder auch, um einen abgehenden Ruf zu initiieren. Auch kann durch Betätigen des Knopfes 9 über die in dem Gehäuse 2 angeordnete Mechanik der Mikrofonarm 11 aus seiner Aufnahme bzw. aus dem Gehäuse ausgefahren werden.

Das Headset ist über eine Schnittstelle 14 und ein Kabel 15 mit einem zur Ein- und/oder Ausgabe von Audiosignalen eingerichteten Gerät verbindbar. Die Verbindung kann dabei beispielsweise mittels eines Kabels erfolgen, möglich ist aber auch, dass die Verbindung der Geräte über eine Funkschnittstelle, etwa basierend auf dem bekannten "Bluetooth"-Standard, erfolgt.

Zur Verwendung als Headset für ein Mobilfunkgerät ist der erfindungsgemäße Sprechhörer sowohl mit einem Lautsprecher als auch mit einem Mikrofon versehen. Es kann aber durchaus auch vorgesehen sein, dass das Headset nur für die Wiedergabe von Audiosignalen, also als Hörer, verwendet wird, etwa im Zusammenspiel mit einem Abspielgerät für Tonträger, wie Compact- oder Mini Discs, oder zur Verwendung mit sogenannten MP3-Playern, bei denen die Musik digital als Datenfile in einem elektronischen Speicher abgelegt ist. Das gezeigte Headset ist auch für diesen Verwendungszweck einsetzbar, hinsichtlich günstigerer Herstellung etc. ist es dann aber auch zweckmäßig, auf die Verwendung eines Mikrofons zu verzichten.

Weiters sollte darauf verwiesen werden, dass auch in Telefon- oder Auskunftszentralen an die Verwendung des erfindungsgemäßen, leichten und komfortabel zu tragenden Sprechhörers gedacht werden kann, und auch die Verwendung im militärischen Bereich, wo kleine, leichte und sicher zu tragende Sprechhörer notwendig sind, ist denkbar. Die genannten-Einsatzgebiete sind natürlich nur beispielhafter Natur und erheben keinen Anspruch auf Vollständigkeit.

## Patentansprüche

1. Hörer, welcher über zumindest eine Schnittstelle (14) mit zumindest einem zumindest für die Ausgabe von Audiosignalen eingerichteten Gerät verbindbar ist, mit zumindest einer Hörkapsel (7), welche in einem Gehäuse (2) angeordnet ist, und mit einem verformbaren Haltebügel (3) zur lösbaren Befestigung am Ohr (EAR) eines Benutzers, wobei der Bügel (3) am Gehäuse (2) und von diesem weglaufend angeordnet ist und das Ohr (EAR) in einem Bereich der Helix (HEL) mit einem in Richtung des Gehäuses (2) rücklaufenden Bereich (3b) hintergreift, wobei der die Helix (HEL) hintergreifende Bereich (3b) des Bügels (3) einen in befestigtem Zustand an der Rückseite des Ohres (EAR) anliegenden Endbereich aufweist, das Gehäuse (2) an seiner der Außenseite der Ohres (EAR) zugewandten Seite eine Ohrauflagefläche (10) aufweist, wobei in befestigtem Zustand der Bügel (3) zumindest bereichsweise gegen die Rückseite des Ohres (EAR) und der Hörer (1) mit der Ohrauflagefläche (10) zumindest bereichsweise so gegen die Außenseite des Ohres (EAR) gedrückt ist, dass die Hörkapsel (7) im Nahbereich des Schalltrichters (CON) und/oder der Gehörgangsöffnung (MEA) des Ohres angeordnet ist, wobei die Ohrauflagefläche (10) sowie die Hörkapsel (7) einen Abstand zu der Gehörgangsöffnung (MEA) aufweisen,
**dadurch gekennzeichnet, dass**
der Haltebügel (3) elastisch verformbar ausgebildet ist.

2. Hörer nach Anspruch 1, **dadurch gekennzeichnet, dass** er in einem hinteren, dem Bügel (3) zugewandten Bereich der Ohrauflagefläche (10) eine Erhebung (6) aufweist, welche in befestigtem Zustand des Hörers (1) in einem hinteren, im wesentlichen der Antihelix (ANT) zugewandten Bereich des Schalltrichters (CON) bzw. in dem in die Antihelix (ANT) übergehenden Bereich des Schalltrichters (CON) abgestützt ist.

3. Hörer nach Anspruch 1 oder 2, **dadurch gekennzeichnet, dass** die Fläche (10) eine über die Ausdehnung der Hörkapsel (7) hinausreichende Erstreckung aufweist.

4. Hörer nach einem der Ansprüche 1 bis 3, **dadurch gekennzeichnet, dass** der Bügel (3) C-förmig ausgebildet ist.

5. Hörer nach einem der Ansprüche 1 bis 4, **dadurch gekennzeichnet, dass** an dem die Helix (HEL) hintergreifenden Ende des Bügels (3b) ein sich mit einer Kontur (4a) an der Rückseite des Ohres (EAR) abstützendes Passstück (4) angeordnet ist

6. Hörer nach Anspruch 5, **dadurch gekennzeichnet, dass** die mit der Rückseite der Ohres (EAR) zusammenwirkende Kontur (4a) des Passstückes (4) im wesentlichen der Form der Rückseite des Ohres angepasst ist.

7. Hörer nach Anspruch 5 oder 6, **dadurch gekennzeichnet, dass** das Passstück (4) und der Bügel (3) einstückig ausgebildet sind.

8. Hörer nach einem der Ansprüche 5 bis 7, **dadurch gekennzeichnet, dass** das Passstück (4) mit einem gummiartigen Überzug versehen ist.

9. Hörer nach einem der Ansprüche 1 bis 8, **dadurch gekennzeichnet, dass** die Erhebung (6) eine im wesentlichen abgerundete Kontur aufweist.

10. Hörer nach einem der Ansprüche 1 bis 9, **dadurch gekennzeichnet, dass** die Erhebung (6) einstückig mit der Hörkapsel (7) ausgebildet ist.

11. Hörer nach einem der Ansprüche 1 bis 10, **gekennzeichnet durch** zumindest ein Mikrofon (8).

12. Hörer nach Anspruch 11, **dadurch gekennzeichnet, dass** das zumindest eine Mikrofon (8) in einem vorderen, dem Bügel (3) abgewandten Bereich des Hörers angeordnet ist.

13. Hörer nach Anspruch 11 oder 12, **dadurch gekennzeichnet, dass** er in einem vorderen, dem Bügel (3) abgewandten Bereich einen ausfahrbaren Mikrofonarm (11) aufweist, welcher in seinem vorderen Bereich das zumindest eine Mikrofon aufnimmt.

14. Hörer nach Anspruch 13, **dadurch gekennzeichnet, dass** der Mikrofonarm (11) teleskopartig ausfahrbar ist.

15. Hörer nach einem der Ansprüche 1 bis 14, **dadurch gekennzeichnet, dass** er in einem vorderen, dem Ohr (EAR) abgewandten Bereich eine Abstützung (13) zum Abstützen des Hörers in einem unmittelbar vor dem Ohr (EAR) liegenden Bereich des Kopfes aufweist.

16. Hörer nach Anspruch 15, **dadurch gekennzeichnet, dass** die Abstützung (13) zumindest bereichsweise mit einem gummiartigen Überzug versehen ist.

17. Hörer nach einem der Ansprüche 1 bis 16, **dadurch gekennzeichnet, dass** er einen hinsichtlich einer Längsachse (X) symmetrischen Aufbau aufweist.

18. Hörer nach einem der Ansprüche 1 bis 17, **dadurch gekennzeichnet, dass** das Gehäuse (2) in einer Aufsicht/Unteransicht eine im wesentlichen dreiecksartige Form aufweist.

19. Hörer nach Anspruch 18, **gekennzeichnet durch** eine im wesentlichen gleichschenkelige oder gleichseitige dreiecksartige Form.

20. Hörer nach Anspruch 18 oder 19, **dadurch gekennzeichnet, dass** die Dreiecksseiten (20a, 20b, 20c) im wesentlichen bogenförmig ausgebildet sind.

21. Hörer nach einem der Ansprüche 18 bis 20, **gekennzeichnet durch** abgerundete Ecken (21a, 21b, 21c).

22. Hörer nach einem der Ansprüche 1 bis 21, **dadurch gekennzeichnet, dass** an der dem Ohr (EAR) abgewandten Seite ein Betätigungselement (9) zum Entgegennehmen und/oder Tätigen von Anrufen vorgesehen ist.

23. Hörer nach Anspruch 22, **dadurch gekennzeichnet, dass** das Betätigungselement (9) über eine im Gehäuseinneren angeordnete Mechanik so mit dem ausfahrbaren Mikrofonarm (11) verbunden ist, dass bei einer Betätigung des Elements (9) der Arm (11) aus seiner eingefahrenen in eine ausgefahrene Position ausgefahren wird.

24. Hörer nach einem der Ansprüche 1 bis 23, **dadurch gekennzeichnet, dass** die Ohrauflagefläche (10) als Abdeckteil für die Gehäuseunterseite ausgeführt und an dieser lösbar befestigbar ist.

25. Hörer nach Anspruch 24, **dadurch gekennzeichnet, dass** der Abdeckteil aus einem gummiartigen Material gefertigt ist.

26. Hörer nach Anspruch 16 und 25, **dadurch gekennzeichnet, dass** das aus Gummi gefertigte Abdeckteil sowie der Gummiüberzug für die Abstützung (13) einstückig ausgebildet sind.

## Claims

1. A receiver connectable via at least one interface (14) with at least one apparatus adapted to at least output audio signals, provided with at least one ear piece (7) accommodated in a housing (2) and with one deformable strap (3) for releasable attachment to the user's ear (EAR), the strap (3) being disposed on the housing (2) extending away therefrom and the ear (EAR) passing behind an area of the helix (HEL) with a portion (3b) of said strap, which is oriented back toward the housing (2), said helix (HEL) being provided with an end region abutting the back side of the ear (EAR) when attached, the housing (2) is provided with an ear resting area (10) on the side thereof that faces the exterior of the ear (EAR), wherein the strap (3), when fastened, being at least partially pressed against the back side of the ear (EAR) and the ear resting area (10) of the receiver (1) being at least partially pressed against the exterior of the ear (EAR) in such a manner that the ear piece (7) is disposed in proximity to the pinna (CON) and/or the aperture of the auditory canal (MEA), the ear resting area (10) and the ear piece (7) being held apart from the aperture of the auditory canal (MEA), **characterized in that** the retaining strap (3) is elastically deformable.

2. The receiver according to claim 1, **characterized in that** it is provided, in a rear region of the ear resting area (10) facing the strap (3), with a prominence (6) that abuts on a rear region of the pinna (CON) substantially facing the antihelix (ANT) resp. on the region of the pinna (CON) that merges into the antihelix (ANT) when the receiver (1) is fastened.

3. The receiver according to claim 1 or 2, **characterized in that** the area (10) is provided with an extension beyond the ear piece (7).

4. The receiver according to anyone of the claims 1 to 3, **characterized in that** the strap (3) is C-shaped.

5. The receiver according to anyone of the claims 1 to 4, **characterized in that** an adapter (4) which is provided with a contour (4a) that abuts on the back side of the ear (EAR), is disposed at that end of the strap (3b) that passes behind the helix (HEL).

6. The receiver according to claim 5, **characterized in that** the contour (4a) of the adapter (4) which cooperates with the back side of the ear (EAR) substantially conforms to the shape of the ear's back side.

7. The receiver according to claim 5 or 6, **characterized in that** the adapter (4) and the strap (3) are made in one piece.

8. The receiver according to anyone of the claims 5 to 7, **characterized in that** the adapter (4) is provided with a rubber-like covering.

9. The receiver according to anyone of the claims 1 to 8, **characterized in that** the prominence (6) is provided with a substantially rounded contour.

10. The receiver according to anyone of the claims 1 to 9, **characterized in that** the prominence (6) is configured with the ear piece (7).

11. The receiver according to anyone of the claims 1 to 10, **characterized by** at least one microphone.

12. The receiver according to claim 11, **characterized in that** at least one microphone (8) is disposed in a front region of the receiver (1) turned away from the strap (3).

13. The receiver according to claim 11 or 12, **characterized in that** it is provided, in a front region turned away from the strap (3), with an extendable microphone arm (11) receiving, in the front region thereof, the at least one microphone.

14. The receiver according to claim 13, **characterized in that** it the microphone arm (11) is telescopable.

15. The receiver according to anyone of the claims 1 to 14, **characterized in that** it is provided, in a front region turned away from the ear (EAR), with a supporting surface area (13) for supporting the receiver in a region of the head located immediately in front of the ear (EAR).

16. The receiver according to claim 15, **characterized in that** the supporting surface area (13) is at least in parts provided with a rubber-like covering.

17. The receiver according to anyone of the claims 1 to 16, **characterized in that** it is configured symmetrical about a long axis (X).

18. The receiver according to anyone of the claims 1 to 17, **characterized in that** the housing (2) has a substantially triangular shape viewed from the top / the bottom.

19. The receiver according to claim 18, **characterized in that** it is shaped like an isosceles or an equilateral triangle.

20. The receiver according to claim 18 or 19, **characterized in that** the sides of the triangle (20a, 20b, 20c) are substantially arcuate.

21. The receiver according to anyone of the claims 18 to 20, **characterized by** rounded angles (21a, 21b, 21c).

22. The receiver according to anyone of the claims 1 to 21, **characterized in that** an actuation element (9) for answering and/or making calls is provided on the side turned away from the ear (EAR).

23. The receiver according to claim 22, **characterized in that** the actuation element (9) is connected to the extendable microphone arm (11) through a mechanism disposed within the housing in such a manner that the arm (11) is moved from its retraced into an extended position upon actuation of said element (9).

24. The receiver according to anyone of the claims 1 to 23, **characterized in that** the ear resting area (10) is configured as a cover for the underside of the housing and is releasably fastenable thereon.

25. The receiver according to claim 24, **characterized in that** the cover is made from a rubber-like material.

26. The receiver according to claim 16 and 25, **characterized in that** the cover made from rubber and the rubber covering for the supporting surface area (13) are made in one piece.

## Revendications

1. Ecouteur qui peut être relié par l'intermédiaire d'au moins une interface (14) avec au moins un appareil équipé au moins pour la restitution de signaux audio, avec au moins un embout d'écoute (7) qui est disposée dans un boîtier (2) et avec un étrier de maintien déformable (3) pour une fixation amovible sur l'oreille (EAR) d'un utilisateur, alors que l'étrier (3) est disposé sur le boîtier (2) et en s'écartant de celui-ci et passe; avec un tronçon (3b) revenant en direction du boîtier, derrière l'oreille (EAR) dans une zone de l'hélice (HEL), alors que la zone (3b) de l'étrier (3) qui passe derrière l'hélice (HEL) comprend une zone d'extrémité qui s'appuie en position de fixation sur le côté arrière de l'oreille (EAR) et que le boîtier (2) comprend sur son côté dirigé vers le côté extérieur de l'oreille (EAR) une surface d'appui de l'oreille (10), alors qu'en position de fixation, l'étrier (3) est appuyé au moins localement sur le côté arrière de l'oreille (EAR) et l'écouteur (1) est appuyé avec la surface d'appui de l'oreille (10) au moins localement de telle façon sur le côté extérieur de l'oreille (EAR) que l'embout d'écoute (7) soit disposé dans la zone proche du pavillon (CON) et/ou de l'ouverture du conduit auditif (MEA) de l'oreille et alors que la surface d'appui de l'oreille (10), ainsi que la capsule d'écoute (7), sont disposées avec un espacement par rapport à l'ouverture du conduit auditif (MEA), **caractérisé en ce que** l'étrier de maintien (3) est configuré pour pouvoir être déformé de manière souple.

2. Ecouteur selon la revendication 1, **caractérisé en ce que**, dans une zone arrière dirigée vers l'étrier (3) de la surface d'appui de l'oreille (10), il comprend une protubérance (6), laquelle est, en position de fixation de l'écouteur (1), supportée dans une zone arrière sensiblement dirigée vers l'antihélice (ANT) du pavillon (CON) ou dans la zone du pavillon (CON) qui devient l'antihélice (ANT).

3. Ecouteur selon la revendication 1 ou 2, **caractérisé en ce que** la surface (10) comprend une partie saillante allant au-delà de l'expansion de l'embout d'écoute (7).

4. Ecouteur selon l'une quelconque des revendications 1 à 3, **caractérisé en ce que** l'étrier (3) est configuré en forme de C.

5. Ecouteur selon l'une quelconque des revendications 1 à 4, **caractérisé en ce qu'**à l'extrémité de l'étrier (3b) passant derrière l'hélice (HEL) est disposée une pièce d'ajustage (4) s'appuyant avec un contour (4a) sur le côté arrière de l'oreille (EAR).

6. Ecouteur selon la revendication 5, **caractérisé en ce que** le contour (4a) de la pièce d'ajustage (4) agissant de concert avec le côté arrière de l'oreille (EAR) est sensiblement adapté à la forme du côté arrière de l'oreille.

7. Ecouteur selon la revendication 5 ou 6, **caractérisé en ce que** la pièce d'ajustage (4) et l'étrier (3) sont configurés en une seule pièce.

8. Ecouteur selon l'une quelconque des revendications 5 à 7, **caractérisé en ce que** la pièce d'ajustage (4) est munie d'un revêtement caoutchouteux.

9. Ecouteur selon l'une quelconque des revendications 1 à 8, **caractérisé en ce que** la protubérance (6) comprend un contour sensiblement arrondi.

10. Ecouteur selon l'une quelconque des revendications 1 à 9, **caractérisé en ce que** la protubérance (6) est configurée d'une seule pièce avec l'embout d'écoute (7).

11. Ecouteur selon l'une quelconque des revendications 1 à 10, **caractérisé en ce qu'**il comprend au moins un microphone (8).

12. Ecouteur selon la revendication 11, **caractérisé en ce que** le microphone (8) est disposé dans une zone avant de l'écouteur qui est opposée à l'étrier (3).

13. Ecouteur selon la revendication 11 ou 12, **caractérisé en ce qu'**il comprend dans une zone avant opposée à l'étrier (3) un bras de microphone (11) qui est extensible et qui porte à sa partie avant le microphone.

14. Ecouteur selon la revendication 13, **caractérisé en ce que** le bras de microphone (11) est extensible de manière télescopique.

15. Ecouteur selon l'une quelconque des revendications 1 à 14, **caractérisé en ce qu'**il comprend, dans une zone avant opposée à l'oreille (EAR), un élément de soutien (13) servant à supporter l'écouteur dans une zone de la tête qui est située directement devant l'oreille (EAR) .

16. Ecouteur selon la revendication 15, **caractérisé en ce que** l'élément de soutien (13) est muni au moins par zones d'un revêtement caoutchouteux.

17. Ecouteur selon l'une quelconque des revendications 1 à 16, **caractérisé en ce qu'**il comprend une structure qui est symétrique par rapport à un axe longitudinal (X).

18. Ecouteur selon l'une quelconque des revendications 1 à 17, **caractérisé en ce que** le boîtier (2) présente, selon une vue par le haut ou par le bas, une forme sensiblement triangulaire.

19. Ecouteur selon la revendication 18, **caractérisé en ce qu'**il présente une forme triangulaire ayant sensiblement des branches ou des côtés égaux.

20. Ecouteur selon la revendication 18 ou 19, **caractérisé en ce que** les côtés du triangle (20a, 20b, 20c) sont sensiblement configurés en forme d'arc.

21. Ecouteur selon l'une quelconque des revendications 18 à 20, **caractérisé en ce qu'**il présente des coins arrondis (21a, 21b, 21c).

22. Ecouteur selon l'une quelconque des revendications 1 à 21, **caractérisé en ce que**, sur le côté opposé à l'oreille (EAR), est prévu un élément d'actionnement (9) pour prendre ou effectuer des appels.

23. Ecouteur selon la revendication 22, **caractérisé en ce que** l'élément d'actionnement (9) est, par l'intermédiaire d'un mécanisme disposé à l'intérieur du boîtier, relié de telle façon avec le bras de microphone extensible (11) que le bras (11) est déplacé de sa position rentrée vers une position sortie lors d'un actionnement de l'élément (9).

24. Ecouteur selon l'une quelconque des revendications 1 à 23, **caractérisé en ce que** la surface d'appui de l'oreille (10) est réalisée comme partie de recouvrement pour le côté inférieur du boîtier et peut être fixée de manière amovible sur celui-ci.

25. Ecouteur selon la revendication 24, **caractérisé en ce que** la partie de recouvrement est réalisée en un matériau caoutchouteux.

26. Ecouteur selon les revendications 16 et 25, **caractérisé en ce que** la partie de recouvrement réalisée en caoutchouc ainsi que le revêtement en caoutchouc pour l'élément de soutien (13) sont configurés en une seule pièce.
